(19) **Europäisches Patentamt**
**European Patent Office**
**Office européen des brevets**

(11) **EP 1 573 586 B1**

(12) **EUROPEAN PATENT SPECIFICATION**

(45) Date of publication and mention
of the grant of the patent:
**11.03.2020 Bulletin 2020/11**

(51) Int Cl.:
***G06F 16/30*** (2019.01)   ***G06Q 10/10*** (2012.01)

(21) Application number: **03772601.5**

(86) International application number:
**PCT/IB2003/005528**

(22) Date of filing: **24.10.2003**

(87) International publication number:
**WO 2004/038610 (06.05.2004 Gazette 2004/19)**

(54) **ASSOCIATION LEARNING FOR AUTOMATED RECOMMENDATIONS**

LERNEN VON ASSOZIATIONEN FÜR AUTOMATISIERTE EMPFEHLUNGEN

APPRENTISSAGE PAR ASSOCIATION DE RECOMMANDATIONS AUTOMATISEES

(84) Designated Contracting States:
**AT BE BG CH CY CZ DE DK EE ES FI FR GB GR HU IE IT LI LU MC NL PT RO SE SI SK TR**

(30) Priority: **25.10.2002 US 421650 P**
**16.12.2002 US 320005**

(43) Date of publication of application:
**14.09.2005 Bulletin 2005/37**

(73) Proprietor: **SAP SE**
**69190 Walldorf (DE)**

(72) Inventors:
• **RONNEWINKEL, Christopher**
**69126 Heidelberg (DE)**
• **KAISER, Matthias**
**Mountain View, CA 94040 (US)**
• **WU, Yuh-Cherng**
**San Jose, CA 95129 (US)**

(74) Representative: **Müller-Boré & Partner**
**Patentanwälte PartG mbB**
**Friedenheimer Brücke 21**
**80639 München (DE)**

(56) References cited:
**US-B1- 6 169 986     US-B1- 6 389 405**

• **CRESTANI F ET AL: "Searching the web by constrained spreading activation", INFORMATION PROCESSING & MANAGEMENT, ELSEVIER, BARKING, GB, vol. 36, no. 4, 1 July 2000 (2000-07-01), pages 585-605, XP004195725, ISSN: 0306-4573, DOI: 10.1016/S0306-4573(99)00073-4**

**Description**

TECHNICAL FIELD

This disclosure relates to association learning and automated recommendations.

BACKGROUND

The increased capability of computers to store vast collections of information has led to a need for increasingly efficient techniques for information retrieval. Information retrieval refers to searching for relevant information in information systems that may contain numerous documents. Some information retrieval systems are based on keywords that index documents and a query language to retrieve documents from centralized document repositories according to those keywords. Typically, a text search engine is utilized that executes a query formulated by a user and returns a set of documents matching the keywords identified within the query. Some search engines may even predict what information is relevant to a user based on keywords identified in such a query. The above-mentioned techniques, however, are insufficient to meet diversified information retrieval needs of some users. In addition, traditional information retrieval systems seldom identify the vast amount of potentially relevant documents that may best answer a particular user's need.

Various problems and limitations may be associated with some information retrieval systems. For example, in some information retrieval systems, there is no genuine interaction between user and system. The user merely accesses information in a passive fashion and a *priori* needs to know how to query relevant information with keywords. The effect of this is that users, both skilled and unskilled in information retrieval, must know how to characterize the information they are searching for with appropriate keywords before an actual search commences. The formulation of such a query is a difficult task, especially in light of the vast amount of information available on the Internet.

Document CRESTANI F ET AL: "Searching the web by constrained spreading activation", INFORMATION PROCESSING & MANAGEMENT, ELSEVIER, BARKING, GB, vol. 36, no. 4, 1 July 2000 (2000-07-01), pages 585-605, XP004195725, ISSN: 0306-4573, DOI: 10.1016/S0306-4573(99)00073-4 discloses a system for intelligent information retrieval and its underlying model. A search profile is constructed by downloading textual content of web pages and combining said content into a single text file. Terms in the text are weighted using a function of their page frequency and their position in the pages, and a list of weighted index terms that form the search profile is generated.

Document US 6,169,986 B1 discloses a system and a method for refining search queries. A search engine is disclosed which suggests related terms, generated using query term correlation data which reflects the frequencies with which specific terms have previously appeared within the same query, to the user to allow the user to refine a search. The related terms are added to and selected from a table so as to guarantee that the modified queries will not produce a NULL query result.

Document US 6,389,405 B1 discloses a system and a method for identifying relationships between concepts within an expert system A spreading activation module utilizes the knowledge base, which is set oriented with named relationships between concepts to traverse the knowledge base efficiently.

In the light of the above, according to an aspect, it is a problem to provide a computer-implemented information retrieval, which improves the chances of retrieving the most relevant information for the users without considerably increasing the demands on the formulation of the search query. This problem is solved by the computer-implemented method having the features defined in claim 1, the article having the features defied in claim 8, and the system having the features defined in claim 9. Preferred embodiments are defined in the dependent claims.

SUMMARY

A system is disclosed to provide associative learning and recommendations. The system includes a learning engine recommendation process that provides one or more recommendations based on user input, a learning engine initiation process that generates initial training data, and a learning engine training process that transforms initial training data and subsequent training data into entity-pair relationships. The system may include user interfaces that allow each user to request and receive recommendations and a confirmation process that captures and stores training data based on user feedback regarding recommendations.

Various aspects of the system relate to generating entity-pair relationships from both implicit and explicit feedback mechanisms and providing recommendations from a directed graph.

For example, according to one aspect, a method includes generating correlation data from initialization data representing relations between entities, generating a directed graph from the correlation data, providing one or more recommendations from the directed graph using a request as input, storing training data in response to user activity, and adapting the correlation data using the training data as input

In some implementations, the method also may include spreading activation through nodes of the directed graph to provide recommendations.

In another aspect, a method includes receiving the request from a user, accessing a first set of one or more nodes on the directed graph matching the request, traversing one or more arcs connected to the first set of one or more nodes, accessing a second set of one or more nodes connected to one or more arcs, and recommending the second set of one or more nodes to the user.

In another aspect, a method includes displaying an interface prompting feedback from the user regarding the quality of recommendations and determing whether to store the request and one or more recommendations as the training data based upon the feedback.

In some implementations, the method may also include observing selected actions by a user based on one or more recommendations.

In another aspect, a method includes adapting correlation data by accessing training data using access controls, generating adaptation data from a learning rule using the training data as input, and adapting the correlation data using the adaptation data as input.

A system, as well as articles that include a machine readable medium storing machine-readable instructions for implementing the various techniques, are disclosed. Details of various implementations are discussed in greater detail below.

In some implementations, one or more of the following advantages may be present. In an e-commerce context the system may provide cross-selling opportunities by leveraging the knowledge learned from other customers. For example, if one customer is interested in purchasing a particular book, the system may provide recommendations of other books that customers may have purchased in connection with that particular book.

The system may also be used in the context of the World Wide Web ("WEB"). For example, a user searching the WEB may be interested in identifying similar websites relating to a topic. The system may record websites visited by other users in connection to the same topic and provide website recommendations thereof.

Another benefit of the system may be in a call center environment. For example, as experienced call center agents respond to customer questions, responses to those questions may be stored as training data in the system. Inexperienced agents responding to customers may benefit from the system by receiving recommendations based on experienced agent interactions with customers.

Additional features and advantages will be readily apparent from the following detailed description, the accompanying drawings and the claims.

BRIEF DESCRIPTION OF THE DRAWINGS

FIG. 1 illustrates an example of a computer-based system for associative learning and automated recommendations.
FIG. 2 illustrates a correlation matrix for capturing knowledge.
FIG. 3 illustrates an associative network derived from a, correlation matrix.
FIG. 4 illustrates spread activation applied once to an associative network.
FIG. 5 illustrates spread activation applied multiple times to an associative network.
FIG. 6 illustrates initial recommendations from a learning engine recommendation process.
FIG. 7 illustrates refined recommendations from a learning engine recommendation process.
FIG. 8 illustrates a learning engine configuration table.

DETAILED DESCRIPTION

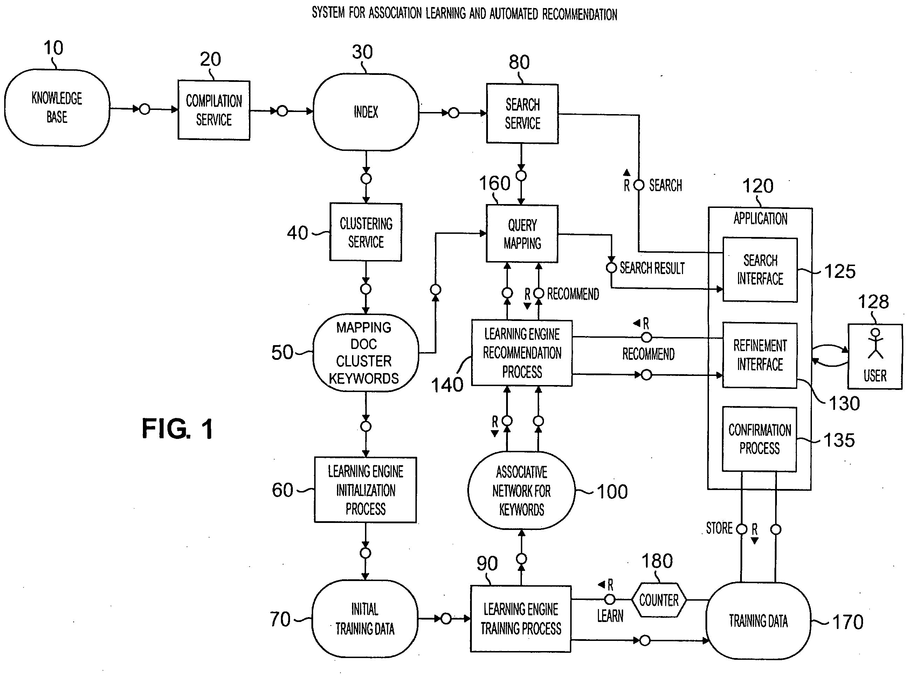

As shown in FIG. 1, a computer-based system provides for associative learning and automated recommendations. The system is designed to provide learning by updating correlations based upon user feedback.

As shown in FIG. 1, the system includes a knowledge base 10 that serves as a repository for information. Although only a single knowledge base 10 is illustrated in FIG. 1, the system may be configured to support multiple knowledge bases. The knowledge base 10 may include a collection of documents such as electronic mail (e-mail messages), web pages, business documents, etc. that may be searched and organized for users.

A compilation service 20 manages the transformation of textual based information in a knowledge base 10 into an index 30. The compilation service represents each document in a knowledge base as a vector. The components of a vector may correspond to a concept or term that may appear in the document and are commonly known as features. Feature vectors may be compiled into the index 30 which may be used as input by a search service 80.

The clustering service 40 may partition the index 30 into groups of documents similar in content, for example, into groups of feature vectors reflecting some minimum level of similarity. The partitioning of index 30 may provide an additional layer of organization to provide an overview of the contents of a knowledge base 10. The clustering service 40 may support various types of clustering including document partitioning algorithms such as k-means clustering, probabilistic clustering, etc. and hierarchical clustering algorithms such as agglomerative clustering and star clustering. In some implementations, the clustering service 40 may use a hierarchical clustering algorithm to determine an initial clustering which may be further refined using a k-means clustering algorithm. Many variants of the k-means algorithm may be used by the clustering service 40. In one implementation, a star algorithm may be used in the clustering service 40. The star algorithm may provide a hierarchical cluster depending upon the contents of the index 30. Each level in the hierarchy may be determined by a threshold minimum level of similarity between pairs of documents within a cluster at a particular level in the hierarchy. The star algorithm may reveal the topic-subtopic structure of the knowledge base 10. A topic summary for each cluster is provided by the center of the underlying star for the cluster. Other implementations may use alternate partitioning and hierarchical clustering algorithms.

A mapping 50 is provided by the clustering service 40. The mapping 50 contains information as to what documents belong to a particular cluster and what document features have been associated with a particular cluster. The mapping 50 may be used as input to a learning engine initialization process 60.

The learning engine initialization process 60 provides for learning of each entity type defined within the knowledge base 10 and may use the mapping 50 for initialization. In one implementation, the learning engine initialization process 60 transforms the feature relationships induced by the cluster structure into initial training data 70.

The generation of initial training data 70 may be implemented in various manners. In one implementation, identifying the relationship between features in the cluster structure may create feature-pairs. For example, if feature A and feature B reside in the same cluster, an entry for the feature-pair (A, B) will be created in the initial training data. In another implementation, feature-pairs may be created using the frequency proportional to their occurrence in the documents. For example, if feature A and feature B co-occur in the same document over five different documents, five entries for feature-pair (A, B) will be created in the initial training data. In other implementations, the generation of training data may use other heuristics to reflect the structure of the entity relationships given as input to initialization.

The training process 90 of the learning engine generates an associative network 100 using the initial training data 70 as input. Details of the learning engine training process are described below. In one implementation, the initial training data 70 is accessed only once and the associative network 100 is used for recommendations.

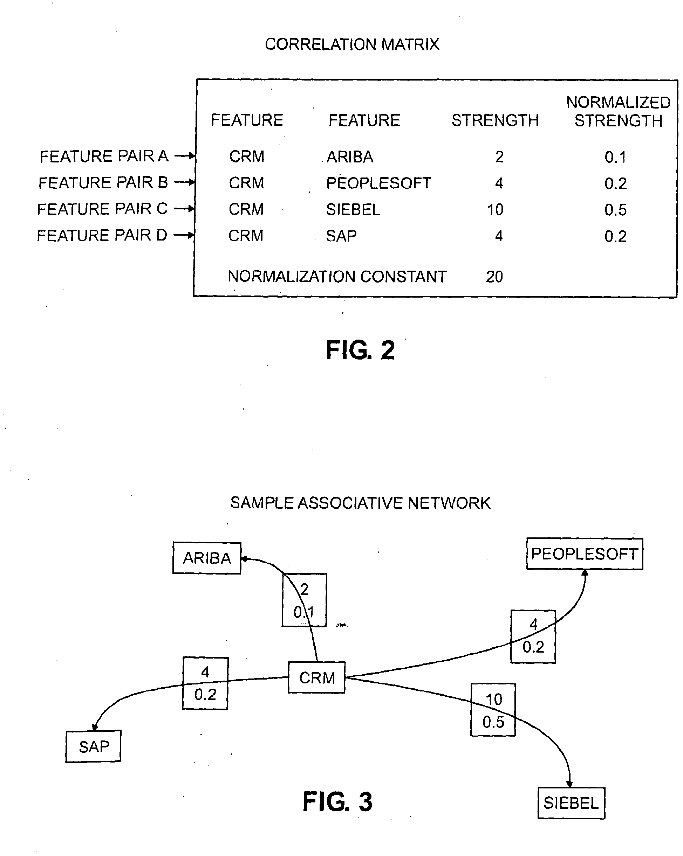

The associative network 100 may be represented as a correlation matrix. As shown in FIG. 2, a correlation matrix containing four feature-pairs is illustrated. For each feature-pair, a strength of association may be recorded. Referring to FIG. 2, feature-pair A has a strength of two, which after initial training indicates that feature-pair A has been observed two times in the initial training data 70.

Once strengths between feature-pairs have been assigned, the learning engine training process 90 may perform a data normalization process using feature-pair strengths as input. The learning engine training process 90 may calculate a normalization constant by summing all the strengths associated with feature-pairs in the correlation matrix. The learning engine training process 90 may then calculate a normalized strength for each feature-pair by dividing a feature-pair's strength by the normalization constant. For example, referring to FIG. 2, the normalized strength for feature-pair B is 0.2. A benefit of normalizing feature-pair strengths is that it may enhance the speed of learning and may facilitate comparison between feature-pairs during the learning engine recommendation process 140 described below. In addition, normalizing feature-pair strengths may allow for a proper derivation of higher order associations that may be used as spreading activation described below.

Referring to FIG. 1, once the initial training data 70 has been processed, the learning engine training process 90 may update the associative network 100 using the observed training data 170. The associative network 100 may be a directed graph containing nodes and weighted edges and may serve as a data source for providing recommendations. Nodes in the associative network 100 may represent features identified in the initial training data 70 and training data 170 and edges of the associative network may represent normalized strengths between stored feature-pairs.

FIG. 3 illustrates a sample associative network represented by the correlation matrix illustrated in FIG. 2. As illustrated in FIG. 3, five nodes representing distinct features (i.e. "CRM", "Ariba", "SAP", "PeopleSoft", and "Siebel") from the correlation matrix are depicted. Arcs of the associative network may correspond to the normalized strengths calculated in the correlation matrix. For example, the arc between "CRM" and "Siebel" in FIG. 3 corresponds to the normalized strength of the "CRM-Siebel" feature-pair in the correlation matrix 70. Once the associative network 100 is established, advanced associative techniques may be employed to further discover relationships among features.

In one aspect, spreading activation may be employed to make recommendations from the associative network. Spreading activation may be characterized as a process that identifies knowledge assumed to be relevant to some focus of attention. A decay constant also may be defined to dampen the effect of activation that may spread through the associative network.

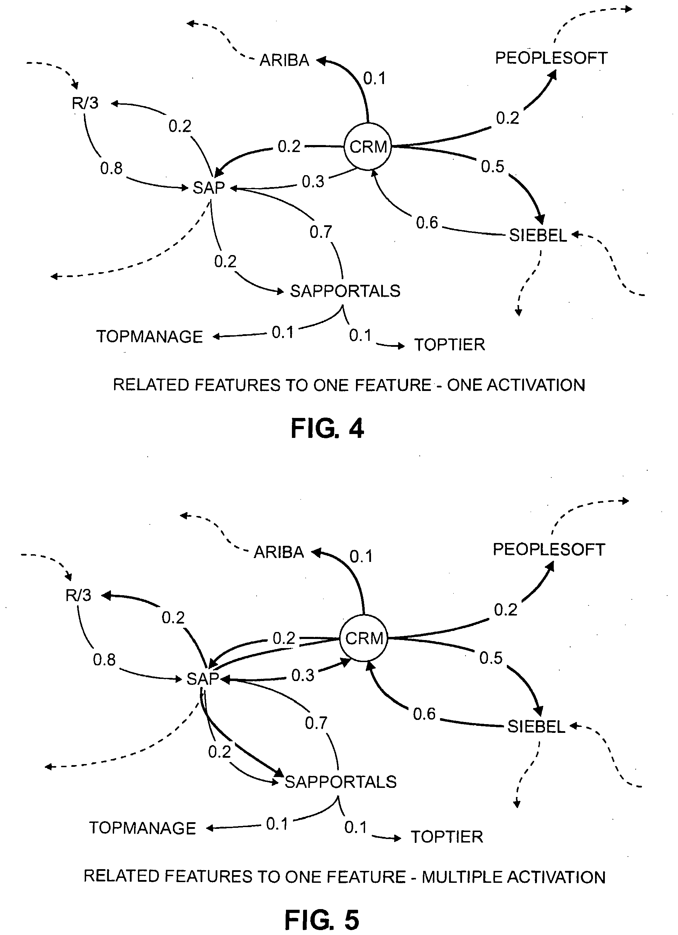

Spreading activation across an associative network is illustrated in FIG 4. Activation may be pumped into one or more nodes of the associative network representing some starting input focus one or more times. Referring to FIG. 4, activation is being pumped once through the "CRM" node. The activation flows through the arcs of the graph structure with the amount of flow modulated by the arc strengths and dampened by the value selected for the decay variable. In one implementation, the following formula may be used for a 1-step activation:

Start-vector v = (v_1, ..., v_n), where v_i is the relevancy assigned to term i.
Recommendation-vector w = (w_1, ..., w_m), where w_j is the relevancy of term j within the recommendation.
Correlation matrix M = (m_ij), where m_ij is the directed normalized association of j pointing to i.
Decay-constant alpha with 0 <= alpha <= 1.
Spreading Activation (1-step):

```
w = [ (1 - alpha) + alpha M ] v.
```

In some implementations, the number of spread activations and the value of the decay constant may be configurable parameters stored in a database. In another implementation, the learning engine training process 90 may store the spread activation network in a database table for subsequent access.

Spreading activation may be useful to deduce associations from an amount of data that is small in comparison to the overall number of possible feature-pairs.

FIG. 5 illustrates the effect of pumping multiple activations through the "CRM" node. In one implementation, the following formula may be used for pumping multiple activations:

Start-vector v = (v_1, ..., v_n), where v_i is the relevancy assigned to term i.
Recommendation-vector w = (w_1, ..., w_k), where w_j is the relevancy of term j within the recommendation.
Correlation matrix M = (m_ij), where m_ij is the directed normalized association of j pointing to i.
Decay-constant alpha with 0 <= alpha <= 1.
Spreading Activation (k-step):

```
v^(k) = (1 - alpha) v^(0) + alpha M v^(k-1)
```

where v^ (0) = v.

As illustrated in FIG. 5, activation spreading may reveal an association between the "CRM" node and "SAPPortals" node even though no such association may exist in the correlation matrix. Although FIG. 5 illustrates features related to one particular feature, spreading activation may also be applied to multiple nodes and may reveal features related to a particular set of features. Furthermore, although only one associative network is illustrated in FIG. 5, multiple associative networks may be supported by the system.

Referring to FIG. 1, a user application 120 that interfaces with the learning engine recommendation process 140 may be provided. In particular, the user application 120 may have a search interface 125, a refinement interface 130, and a confirmation process 135.

The search interface 125 allows a user 128 to compose and submit a query to the search service 80 to receive information. The search service 80 may execute the query by accessing the index 30 and retrieving as a search result a list of documents that match the query features in descending sort order by similarity rank. For each document in the search result, information about the cluster assigned to the document may be passed. The search service 80 may pass the search result to the search interface 125 and also to a query mapping service 160.

The query mapping service 160 may use the search result and mapping 50 to identify document features corresponding to the cluster identified in the search result. The query mapping service may pass these document features to the learning engine recommendation process 140 as an initial point of focus for recommendations.

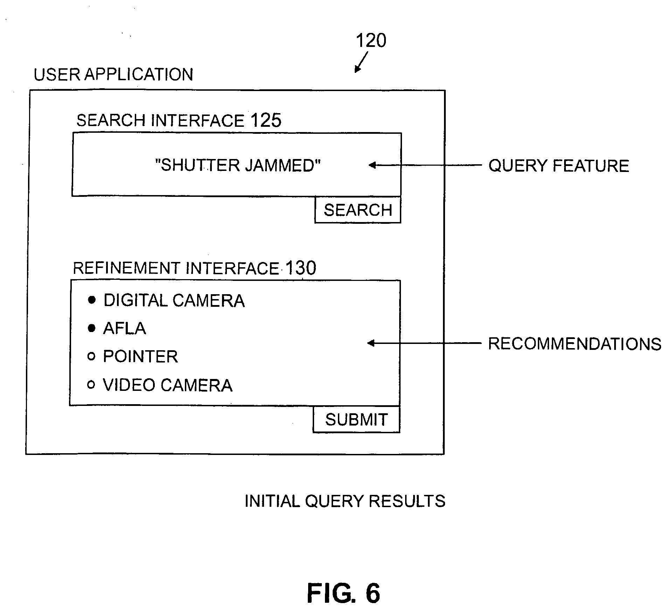

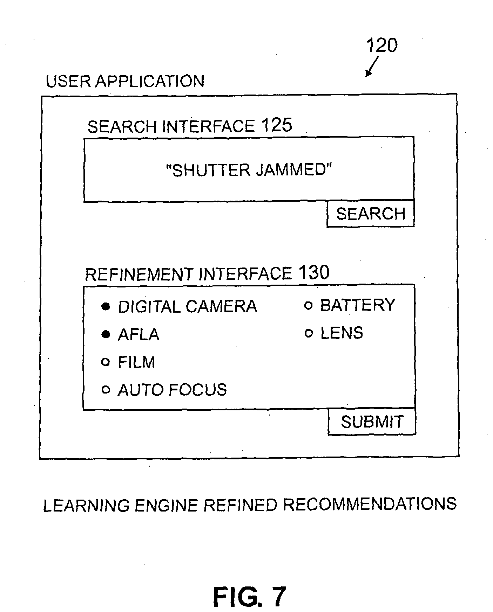

The refinement interface 130 of the user application 120 interacts directly with the learning engine recommendation process 140 and may provide additional input focus for recommendations. For example, referring to FIG. 6, an initial query may be composed of the query feature "shutter jammed". As illustrated in FIG. 6, initial recommendations from the learning engine may include "Digital Camera", "AFLA", "Pointer", and "Video Camera". A user may select one or more recommendations and submit these recommendations along with query features to the learning engine recommendation process 140. Referring to FIG. 7, a user selecting the recommendations of "Digital Camera" and "AFLA" in combination with the query feature "shutter jammed" may result in the learning engine refining its recommendations to the following set: "Digital Camera", "AFLA", "Film", "Autofocus", "Battery" and "Lens". For each refinement request, the learning engine recommendation process may access the association network 100 to retrieve recommendations.

Referring to FIG. 1, the confirmation process 135 provides a method for collecting training-data 170 for learning algorithms. Collecting training-data 170 data may be done either in explicit form by posing questions to the user, or in an implicit form by observing selected actions by the user. Either method of feedback, implicit, explicit, or both may be supported by the system.

The confirmation process 135 may store both the initial input focus and the final set of recommendations from the learning engine recommendation process 140. For example, a user may begin searching the Internet for information relating to automobiles and petroleum. Using the refinement interface 130, the user may conclude the search by focusing on a learning engine recommendation of "motor oil". The confirmation process 135 may store the initial input focus (e.g. "automobiles" and "petroleum") and final recommendation ("motor oil") in a database table and use this data as training-data 170 for subsequent learning.

The learning engine training process 90 may, in an asynchronous fashion, create a copy of the correlation matrix representing the associative network 100, transform the stored training-data 170 into adaptation data comprising feature-pairs, update the copy of the correlation data using the feature-pairs as input, and replace the correlation matrix representing the associative network 100 with the updated copy. In other implementations, the learning engine training process 90 may update the associative network 100 by modifying the underlying correlation matrix directly.

In one implementation, the transformation of data may be triggered by the amount of training-data 170 that may be stored. For example, a counter 180 may be incremented each time training-data 170 is stored. Once a threshold level is reached, the transformation of training-data 170 into feature-pairs and the corresponding updates to the correlation matrix 70 may commence. Other implementations may transform training-data 170 into feature-pairs and update the correlation matrix 70 each time new training data 170 is stored by the confirmation process 135.

Learning rules may be applied to the training-data 170 to generate entity-pairs. Various types of learning rules may be implemented by the learning engine and may be used in combination. Although only three learning rules are discussed below, the learning engine training process 90 may implement additional or different rules.

Co-occurrence based correlation-learning means that for each given set of entities the co-occurrence weight of all contained pairs of different elements are strengthened. The learning rule may be formulated as forming all pairs of different entities contained in a submitted set of entities and adding them to the correlation matrix. For example, collected training-data 170 may be composed of the final set of training data {a, b, c}. Applying the co-occurrence learning rule to the final set may yield the following feature-pairs {(a,b), (a,c), (b,a), (b,c), (c,a), (c,b)}. If the distribution of co-occurrence sets forwarded to the learning engine is static and is randomly sampled, then the correlation strengths may converge to the probability of a pair of entities being present in such a set averaged over the given distribution of sets. Typically, however, where there may be changes in the environment, the distributions of co-occurrence sets may be dynamic. As a result, the co-occurrence learning rule may provide the possibility of adapting to those changes. Learning engine recommendations based on co-occurrence learning may result in recommending entities that are similar in the sense that they frequently are observed in combination with each other.

Navigation-based correlation learning means that for given initial and final sets of entities, a reduced path through the sets of entities may be interpreted which may reflect knowledge. The learning rule can be formulated as forming all pairs of different entities where a first entity is from a submitted initial set of entities, the second entity is from a submitted final set, neither the first entity nor second entity appears in both the initial set and final set of entities, and adding all pairs of different entities to the correlation matrix. For example, collected training-data 170 from the confirmation process 135 may be composed of an initial set training-data composed of {a, b, c} and a final set of training-data composed of {b, d, e}. Applying the navigation based learning rule to the training-data may yield the following feature-pairs {(a, d), (a, e), (c, d), (c, e)}. A benefit of navigation-based correlation learning may be that recommendations based on these reduced paths may be explorative and may be driven by navigational patterns pointing a user in new directions.

Sequence-based correlation learning means that a given sequence of entities is interpreted as a directed path through the space of all entities. The learning rule may be formulated as forming all pairs of different entities where the second entity is a successor in the entity sequence compared to the first entity and adding pairs of different entities to the adaptation-data. For example, collected training-data may be composed of a sequence-based set of training data composed of {A > B > C > D}. Applying the sequence-based correlation-learning rule to this set may yield the following feature-pairs { (A > B), (B > C), (C > D)}. Learning engine recommendations based on sequences may be strongly directed to "specialization" as long as the correlations of entities exhibit a directed hierarchical structure and the nodes correspond to "specialized" entities. For example, products from a product catalogue, where the catalogue structure can be interpreted as defining such a correlation structure.

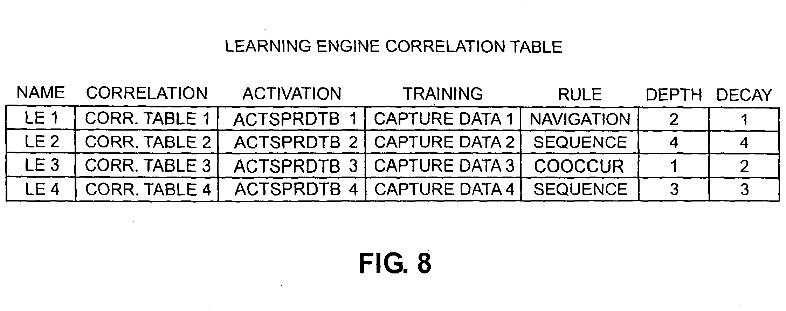

Multiple learning engines may be supported by the system. Different configurations of learning engines may be stored in a learning engine customizing table. As shown, for example, in FIG. 8, each learning engine configuration may be identified by a name. The customization parameters for each learning engine configuration may include: name of database-table containing correlations, name of database-table containing activation-spread correlations, name of database-table containing training-data, learning rules that may be applied, and activation spreading parameters such as depth of spreading and decay constant.

Various features of the system may be implemented in hardware, software, or a combination of hardware and software. For example, some features of the system may be implemented in computer programs executing on programmable computers. Each program may be implemented in a high level procedural or object-oriented programming language to communicate with a computer system or other machine. Furthermore, each such computer program may be stored on a storage medium such as read-only-memory (ROM) readable by a general or special purpose programmable computer or processor, for configuring and operating the computer to perform the functions described above.

**Claims**

1. A computer-implemented method of associative learning for automated recommendations, the method comprising:

generating correlation data from initialization data representing relations or associations between features, wherein generating the correlation data comprises:

forming a feature-pair from the initialization data;
computing a strength of association for the feature-pair, wherein computing a strength of association comprises calculating a frequency of occurrence for the feature-pair in the initialization data; and
computing a normalized strength of association for the feature-pair, wherein the correlation data includes the normalized strength of association;

generating a directed graph from the correlation data, wherein generating the directed graph comprises:

- generating nodes from the correlation data using feature-pairs as input; and
- generating arcs connecting the nodes using strengths of association between the feature-pairs as input;

providing one or more recommendations from the directed graph using a request as input, wherein providing recommendations comprises:

- receiving a request from a user via a user interface;
- accessing a first set of one or more nodes on the directed graph matching the request;
- traversing one or more arcs connected to the first set of one or more nodes, wherein traversing one or more arcs connected to the first set of one or more nodes comprises:

obtaining an arc strength from an arc;
comparing the arc strength to a pre-defined value; and
determining whether to traverse the arc based on the comparison;

- accessing a second set of one or more nodes connected to one or more arcs; and
- recommending the second set of one or more nodes to the user;

collecting training data by explicit or implicit feedback from user activity, wherein explicit feedback comprises displaying an interface prompting feedback from the user regarding the quality of the recommendations, while implicit feedback comprises observing selected actions that a user performs based on one or more recommendations;
determining whether to store the request and the recommendations in a database as the training data based upon the feedback; and
adapting the correlation data using the training data as input, wherein adapting correlation data comprises:

accessing the training data using access controls;
generating adaptation data from a learning rule using the training data as input; and
adapting the correlation data using the adaptation data as input,

wherein generating adaptation data from the learning rule comprises operations according to one or more of the following learning rules:

a co-occurence based correlation-learning rule;
a navigation-based correlation-learning rule; and
a sequence-based correlation-learning rule,

wherein generating adaptation data from the co-occurrence based correlation learning rule comprises accessing a data set in the training data;

forming an feature-pair based on the co-occurrence of elements in the data set;

determining whether the feature-pair exists in the adaptation data; and

adding the feature-pair to the adaptation data if the feature-pair does not exist in the adaptation data;

wherein generating the adaptation data from the navigation-based correlation-learning rule comprises:

accessing a first data set in the training data;

accessing a second data set in the training data corresponding to the initial set;

forming a feature-pair wherein a first feature is in the first data set, a second feature is in the second data set, and the first feature and the second feature in combination are not in either the first data set or second data set;

determining whether the feature-pair exists in the adaptation data; and

adding the feature-pair to the adaptation data if the feature-pair does not exist in the adaptation data; and

wherein generating the adaptation data from the sequence-based correlation-learning rule comprises:

accessing a sequenced data set in the training data;

forming an feature-pair which consists of a first and second feature from the sequenced data set wherein the second feature immediately follows the first feature;

determining whether the feature-pair exists in the adaptation data; and

adding the feature-pair to the adaptation data if the feature-pair does not exist in the adaptation data.

2. The method of claim 1 wherein computing the normalized strength of association comprises:

calculating a normalization constant by summing the strength of association for each feature-pair; and

calculating the normalized strength of association by dividing the strength of association by the normalization constant.

3. The method of claim 1 wherein providing one or more recommendations comprises applying spread activation to the first set of one or more nodes.

4. The method of claim 3 wherein applying spread activation comprises:

obtaining a level of activation from a database table;

obtaining a decay constant from a database table;

applying a spreading activation algorithm to the first set of one or more nodes.

5. The method of claim 1 wherein adapting correlation data using the adaptation data as input comprises:

triggering a copy of the correlation data to a second correlation data;

adding feature-pairs from the adaptation data to the second correlation data;

calculating a strength of association for the feature-pairs in the second correlation data;

calculating a normalized strength of association for the feature-pairs in the second correlation data; and

overlaying the correlation data with the second correlation data.

6. The method of claim 5 wherein adapting correlation data using the adaptation data as input further comprises determining whether a threshold amount of training data is collected.

7. The method of claim 5 wherein adapting correlation data using the adaptation data as input is performed asynchronously.

8. An article comprising a machine-readable medium storing machine-readable instructions that, when applied to the machine, cause the machine to perform an operation comprising the steps according to the method of anyone of the claims 1 to 7.

9. A system comprising:

a computer network;

a directory coupled to the network, the directory storing correlation data, training data, and configuration data;

user interfaces coupled to the network to allow each user independently to request and receive recommendations; and

a service delivery device coupled to the network, the service delivery device including a processor and memory storing instructions that, in response to receiving a request for recommendations, cause the processor to perform an operation comprising the steps according to the method of anyone of the claims 1 to 7.

**Patentansprüche**

1. Ein computerimplementiertes Verfahren zum assoziativen Lernen für automatisierte Empfehlungen, wobei das Verfahren Folgendes umfasst:

Erzeugen von Korrelationsdaten aus Initialisierungsdaten, die Beziehungen oder Assoziationen zwischen Merkmalen darstellen, wobei das Erzeugen der Korrelationsdaten Folgendes umfasst:

Bilden eines Merkmal-Paares aus den Initialisierungsdaten;

Berechnen einer Stärke der Assoziation für das Merkmal-Paar, wobei das Berechnen einer Stärke der Assoziation das Berechnen einer Häufigkeit des Auftretens für das Merkmal-Paar in den Initialisierungsdaten umfasst; und

Berechnen einer normierten Assoziationsstärke für das Merkmal-Paar, wobei die Korrelationsdaten die normierte Assoziationsstärke enthalten;

Erzeugen eines gerichteten Graphen aus den Korrelationsdaten, wobei das Erzeugen des gerichteten Graphen Folgendes umfasst:

- Erzeugen von Knoten aus den Korrelationsdaten unter Verwendung von Merkmal-Paaren als Eingabe; und
- Erzeugung von Bögen, die die Knoten verbinden, unter Verwendung der Assoziationsstärken zwischen den Feature-Paaren als Eingabe;

Bereitstellen einer oder mehrerer Empfehlungen aus dem gerichteten Graphen unter Verwendung einer Anforderung als Eingabe, wobei das Bereitstellen von Empfehlungen Folgendes umfasst:

- Empfangen einer Anforderung ausgehend von einem Benutzer über eine Benutzerschnittstelle;
- Zugreifen auf einen ersten Satz aus einem oder mehreren Knoten im gerichteten Graphen, der mit der Anforderung übereinstimmt;
- Durchlaufen eines oder mehrerer Bögen, die mit dem ersten Satz aus einem oder mehreren Knoten verbunden sind, wobei das Durchlaufen eines oder mehrerer Bögen, die mit dem ersten Satz aus einem oder mehreren Knoten verbunden sind, Folgendes umfasst:

Erhalten einer Bogenstärke von einem Bogen;

Vergleichen der Bogenstärke mit einem vordefinierten Wert; und

Bestimmen, ob der Bogen aufgrund des Vergleichs durchlaufen werden soll;

- Zugreifen auf einen zweiten Satz aus einem oder mehreren Knoten, die mit einem oder mehreren Bögen verbunden sind; und
- dem Benutzer den zweiten Satz aus einem oder mehreren Knoten empfehlen;

Sammeln von Trainingsdaten durch explizite oder implizite Rückmeldung der Benutzeraktivität, wobei die explizite Rückmeldung die Anzeige einer Schnittstelle umfasst, die den Benutzer auffordert eine Rückmeldung hinsichtlich der Qualität der Empfehlungen zu geben, während das implizite Feedback die Beobachtung ausgewählter Aktionen umfasst, die ein Benutzer aufgrund einer oder mehrerer Empfehlungen ausführt;

Bestimmen, ob die Anforderung und die Empfehlungen in einer Datenbank als Trainingsdaten auf der Grundlage des Feedbacks gespeichert werden sollen; und

Anpassen der Korrelationsdaten unter Verwendung der Trainingsdaten als Eingabe, wobei das Anpassen der Korrelationsdaten Folgendes umfasst:

Zugreifen auf die Trainingsdaten unter Verwendung von Zugriffskontrollen;
Erzeugen von Anpassungsdaten aus einer Lernregel unter Verwendung der Trainingsdaten als Eingabe; und
Anpassen der Korrelationsdaten mit den Anpassungsdaten als Eingabe,

wobei das Erzeugen von Anpassungsdaten aus der Lernregel Operationen gemäß einer oder mehreren der folgenden Lernregeln umfasst:

eine auf Kookkurrenz bzw. dem gemeinsamen Auftreten (*co-occurrence*) basierende Korrelations-Lernregel;
eine navigationsbasierte Korrelations-Lernregel; und
eine sequenzbasierte Korrelations-Lernregel,

wobei das Erzeugen von Anpassungsdaten aus der kookkurrenzbasierten Korrelations-Lernregel Folgendes umfasst:

Zugreifen auf einen Datensatz in den Trainingsdaten;
Bilden eines Merkmal-Paares basierend auf der Kookkurrenz von Elementen im Datensatz;
Bestimmen, ob das Merkmal-Paar in den Anpassungsdaten vorhanden ist; und
Hinzufügen des Merkmal-Paares zu den Anpassungsdaten, wenn das Merkmal-Paar in den Anpassungsdaten nicht vorhanden ist;

wobei das Erzeugen der Anpassungsdaten aus der navigationsbasierten Korrelations-Lernregel Folgendes umfasst:

Zugreifen auf einen ersten Datensatz in den Trainingsdaten;
Zugreifen auf einen zweiten Datensatz in den Trainingsdaten, der dem anfänglichen Satz entspricht;
Bilden eines Merkmal-Paares, wobei ein erstes Merkmal im ersten Datensatz ist, ein zweites Merkmal im zweiten Datensatz ist und das erste Merkmal und das zweite Merkmal in Kombination weder im ersten Datensatz noch im zweiten Datensatz sind;
Bestimmen, ob das Merkmal-Paar in den Anpassungsdaten vorhanden ist; und
Hinzufügen des Merkmal-Paares zu den Anpassungsdaten, wenn das Merkmal-Paar in den Anpassungsdaten nicht vorhanden ist; und

wobei das Erzeugen der Anpassungsdaten aus der sequenzbasierten Korrelations-Lernregel Folgendes umfasst:

Zugreifen auf einen sequenzierten Datensatz in den Trainingsdaten;
Bilden eines Merkmal-Paares, das besteht aus einem ersten und einem zweiten Merkmal aus dem sequenzierten Datensatz, wobei das zweite Merkmal dem ersten Merkmal unmittelbar folgt;
Bestimmen, ob das Merkmal-Paar in den Anpassungsdaten vorhanden ist; und
Hinzufügen des Merkmal-Paares zu den Anpassungsdaten, wenn das Merkmal-Paar in den Anpassungsdaten nicht vorhanden ist.

2. Das Verfahren nach Anspruch 1, wobei die Berechnung der normalisierten Assoziationsstärke Folgendes umfasst:

Berechnen einer Normalisierungskonstante durch Summieren der Assoziationsstärke für jedes Merkmal-Paar; und
Berechnen der normalisierten Assoziationsstärke durch Division der Assoziationsstärke durch die Normalisierungskonstante.

3. Das Verfahren nach Anspruch 1, wobei das Bereitstellen einer oder mehrerer Empfehlungen das Anwenden einer Spread-Aktivierung (*spread activation*) auf den ersten Satz aus einem oder mehreren Knoten umfasst.

4. Das Verfahren nach Anspruch 3, wobei das Anwenden der *Spread*-Aktivierung Folgendes umfasst:

Erhalten eines Aktivierungsgrades (*level of activation*) aus einer Datenbanktabelle;
Erhalten einer Abklingkonstante (*decay constant*) aus einer Datenbanktabelle;

Anwenden eines Spread-Aktivierungs-Algorithmus auf den ersten Satz aus einem oder mehreren Knoten.

5. Das Verfahren nach Anspruch 1, wobei das Anpassen von Korrelationsdaten unter Verwendung der Anpassungsdaten als Eingabe Folgendes umfasst:

Auslösen einer Kopie der Korrelationsdaten zu zweiten Korrelationsdaten;
Hinzufügen von Merkmal-Paaren aus den Anpassungsdaten zu den zweiten Korrelationsdaten;
Berechnen einer Assoziationsstärke für die Merkmal-Paare in den zweiten Korrelationsdaten;
Berechnen einer normalisierten Assoziationsstärke für die Merkmal-Paare in den zweiten Korrelationsdaten; und
Überlagern der Korrelationsdaten mit den zweiten Korrelationsdaten.

6. Das Verfahren nach Anspruch 5, wobei das Anpassen von Korrelationsdaten unter Verwendung der Anpassungsdaten als Eingabe ferner das Bestimmen umfasst, ob eine Schwellenmenge von Trainingsdaten gesammelt wird.

7. Das Verfahren nach Anspruch 5, wobei das Anpassen von Korrelationsdaten unter Verwendung der Anpassungsdaten als Eingabe asynchron durchgeführt wird.

8. Ein Artikel, der ein maschinenlesbares Medium umfasst, das maschinenlesbare Anweisungen speichert, die, wenn sie auf die Maschine angewendet werden, die Maschine veranlassen, einen Vorgang auszuführen, der die Schritte gemäß dem Verfahren nach irgendeinem der Ansprüche von 1 bis 7 umfasst.

9. Ein System, das Folgendes umfasst:

ein Computernetzwerk;
ein mit dem Netzwerk gekoppeltes Verzeichnis, wobei das Verzeichnis Korrelationsdaten, Trainingsdaten und Konfigurationsdaten speichert;
Benutzerschnittstellen, die mit dem Netzwerk gekoppelt sind, um es jedem Benutzer zu ermöglichen, unabhängig voneinander Empfehlungen anzufordern und zu empfangen; und
eine mit dem Netzwerk gekoppelte Dienstbereitstellungs-Vorrichtung, wobei die Dienstbereitstellungs-Vorrichtung einen Prozessor und Speicher enthält, der Anweisungen speichert, die als Reaktion auf das Empfangen einer Anforderung von Empfehlungen den Prozessor veranlassen, eine Operation durchzuführen, die die Schritte gemäß dem Verfahren nach irgendeinem der Ansprüche von 1 bis 7 umfasst.

## Revendications

1. Un procédé d'apprentissage par association mis en œuvre par ordinateur pour des recommandations automatisées, le procédé comprenant le fait de :

générer des données de corrélation à partir de données d'initialisation représentant des relations ou des associations entre des caractéristiques, sachant que la génération des données de corrélation comprend le fait de :

former une paire de caractéristiques à partir des données d'initialisation ;
calculer une force d'association pour la paire de caractéristiques, sachant que le calcul d'une force d'association comprend le calcul d'une fréquence d'occurrence pour la paire de caractéristiques dans les données d'initialisation ; et de
calculer une force d'association normalisée pour la paire de caractéristiques, sachant que les données de corrélation incluent la force d'association normalisée ;

générer un graphe orienté à partir des données de corrélation, sachant que le fait de générer le graphe orienté comprend le fait de :

- générer des nœuds à partir des données de corrélation en utilisant des paires de caractéristiques comme entrée ; et
- générer des arcs reliant les nœuds en utilisant comme entrée les forces d'association entre les paires de caractéristiques ;

fournir une ou plusieurs recommandations à partir du graphe orienté en utilisant une requête comme entrée, sachant que le fait de fournir des recommandations comprend le fait de :

- recevoir une requête de la part d'un utilisateur via une interface utilisateur ;
- accéder à un premier ensemble d'un ou plusieurs nœuds dans le graphe orienté correspondant à la requête;
- traverser un ou plusieurs arcs connectés au premier ensemble d'un ou plusieurs nœuds, sachant que le fait de traverser un ou plusieurs arcs connectés au premier ensemble d'un ou plusieurs nœuds comprend le fait de :

obtenir une force d'arc à partir d'un arc ;
comparer la force d'arc à une valeur prédéfinie ; et de
déterminer s'il faut traverser l'arc en se basant sur la comparaison ;

- accéder à un deuxième ensemble d'un ou plusieurs nœuds connectés à un ou plusieurs arcs ; et
- recommander à l'utilisateur le deuxième ensemble d'un ou plusieurs nœuds ;

recueillir des données d'apprentissage par une retour explicite ou implicite de l'activité de l'utilisateur, sachant que le retour explicite comprend l'affichage d'une interface incitant l'utilisateur à fournir un retour concernant la qualité des recommandations, tandis que le retour implicite consiste à observer certaines actions qu'un utilisateur effectue sur la base d'une ou plusieurs recommandations ;
déterminer s'il convient de stocker la requête et les recommandations dans une base de données comme données d'apprentissage sur la base du retour ; et de
adapter les données de corrélation en utilisant les données d'apprentissage comme entrée, sachant que le fait d'adapter les données de corrélation comprend le fait de :

accéder aux données d'apprentissage en utilisant des contrôles d'accès ;
générer des données d'adaptation à partir d'une règle d'apprentissage en utilisant les données d'apprentissage comme entrée ; et de
adapter les données de corrélation en utilisant les données d'adaptation comme entrée,

sachant que la génération de données d'adaptation à partir de la règle d'apprentissage comprend des opérations d'après une ou plusieurs des règles d'apprentissage suivantes :

une règle d'apprentissage par corrélation basée sur la cooccurrence ;
une règle d'apprentissage par corrélation basée sur la navigation ; et
une règle d'apprentissage par corrélation basée sur la séquence,

sachant que le fait de générer des données d'adaptation à partir de la règle d'apprentissage par corrélation basée sur la cooccurrence comprend le fait de :

accéder à un ensemble de données dans les données d'apprentissage ;
former une paire de caractéristiques en fonction de la cooccurrence d'éléments dans l'ensemble de données ;
déterminer si la paire de caractéristiques existe dans les données d'adaptation ; et de
ajouter la paire de caractéristiques aux données d'adaptation si la paire de caractéristiques n'existe pas dans les données d'adaptation ;

sachant que le fait de générer des données d'adaptation à partir de la règle d'apprentissage par corrélation basée sur la navigation comprend le fait de :

accéder à un premier ensemble de données dans les données d'apprentissage ;
accéder à un deuxième ensemble de données dans les données d'apprentissage correspondant à l'ensemble initial ;
former une paire de caractéristiques, sachant qu'une première caractéristique se trouve dans le premier ensemble de données, qu'une deuxième caractéristique se trouve dans le deuxième ensemble de données, et que la première caractéristique et la deuxième caractéristique en combinaison ne se trouvent ni dans le premier ensemble de données ni dans le deuxième ensemble de données ;
déterminer si la paire de caractéristiques existe dans les données d'adaptation ; et de
ajouter la paire de caractéristiques aux données d'adaptation si la paire de caractéristiques n'existe pas dans les données d'adaptation ; et

sachant que le fait de générer les données d'adaptation à partir de la règle d'apprentissage par corrélation basée sur la séquence comprend le fait de :

accéder à un ensemble de données séquencées dans les données d'apprentissage ;
former une paire de caractéristiques qui consiste en une première et une deuxième caractéristique à partir de l'ensemble de données séquencées, sachant que la deuxième caractéristique suit immédiatement la première caractéristique ;
déterminer si la paire de caractéristiques existe dans les données d'adaptation ; et de
ajouter la paire de caractéristiques aux données d'adaptation si la paire de caractéristiques n'existe pas dans les données d'adaptation.

2. Le procédé d'après la revendication 1, sachant que le fait de calculer de la force d'association normalisée comprend le fait de :

calculer une constante de normalisation en additionnant la force d'association pour chaque paire de caractéristiques ; et de
calculer la force d'association normalisée en divisant la force d'association par la constante de normalisation.

3. Le procédé d'après la revendication 1, sachant que le fait de fournir une ou plusieurs recommandations comprend le fait d'appliquer une activation d'étalement (*spread activation*) au premier ensemble d'un ou plusieurs nœuds.

4. Le procédé d'après la revendication 3, sachant que le fait d'appliquer une activation d'étalement comprend le fait de :

obtenir un niveau d'activation (*level of activation*) à partir d'une table de base de données ;
obtenir une constante de décroissance (*decay constant*) à partir d'une table de base de données ;
appliquer un algorithme d'activation d'étalement au premier ensemble d'un ou plusieurs nœuds.

5. Le procédé d'après la revendication 1, sachant que le fait d'adapter des données de corrélation en utilisant les données d'adaptation comme entrée comprend le fait de :

déclencher une copie des données de corrélation vers les deuxièmes données de corrélation ;
ajouter des paires de caractéristiques depuis les données d'adaptation aux deuxièmes données de corrélation ;
calculer une force d'association pour les paires de caractéristiques dans les deuxièmes données de corrélation ;
calculer une force d'association normalisée pour les paires de caractéristiques dans les deuxièmes données de corrélation ; et de
superposer les données de corrélation avec les deuxièmes données de corrélation.

6. Le procédé d'après la revendication 5, sachant que le fait d'adapter des données de corrélation en utilisant les données d'adaptation comme entrée comprend en outre le fait de déterminer si une quantité seuil de données d'apprentissage est collectée ou non.

7. Le procédé d'après la revendication 5, sachant que le fait d'adapter des données de corrélation en utilisant les données d'adaptation comme entrée est effectuée de manière asynchrone.

8. Un article comprenant un support lisible par machine stockant des instructions lisibles par machine qui, lorsqu'elles sont appliquées à la machine, amènent la machine à effectuer une opération comprenant les étapes conformes au procédé d'après l'une quelconque des revendications de 1 à 7.

9. Un système comprenant :

un réseau informatique ;
un répertoire couplé au réseau, le répertoire stockant des données de corrélation, des données d'apprentissage et des données de configuration ;
des interfaces utilisateur couplées au réseau pour permettre à chaque utilisateur de demander et de recevoir indépendamment des recommandations ; et
un dispositif de prestation de services couplé au réseau, le dispositif de prestation de services incluant un processeur et une mémoire stockant des instructions qui, en réponse à la réception d'une demande de recommandations, amènent le processeur à effectuer une opération comprenant les étapes conformes au procédé d'après l'une quelconque des revendications de 1 à 7.

SYSTEM FOR ASSOCIATION LEARNING AND AUTOMATED RECOMMENDATION

FIG. 1

CORRELATION MATRIX

| | FEATURE | FEATURE | STRENGTH | NORMALIZED STRENGTH |
|---|---|---|---|---|
| FEATURE PAIR A → | CRM | ARIBA | 2 | 0.1 |
| FEATURE PAIR B → | CRM | PEOPLESOFT | 4 | 0.2 |
| FEATURE PAIR C → | CRM | SIEBEL | 10 | 0.5 |
| FEATURE PAIR D → | CRM | SAP | 4 | 0.2 |
| | NORMALIZATION CONSTANT | | 20 | |

**FIG. 2**

SAMPLE ASSOCIATIVE NETWORK

**FIG. 3**

RELATED FEATURES TO ONE FEATURE - ONE ACTIVATION

**FIG. 4**

RELATED FEATURES TO ONE FEATURE - MULTIPLE ACTIVATION

**FIG. 5**

120

USER APPLICATION

SEARCH INTERFACE 125

"SHUTTER JAMMED" ◄───────── QUERY FEATURE

| SEARCH |

REFINEMENT INTERFACE 130

- ● DIGITAL CAMERA
- ● AFLA
- ○ POINTER                  ◄───────── RECOMMENDATIONS
- ○ VIDEO CAMERA

| SUBMIT |

INITIAL QUERY RESULTS

# FIG. 6

120

USER APPLICATION

SEARCH INTERFACE 125

"SHUTTER JAMMED"

SEARCH

REFINEMENT INTERFACE 130

- DIGITAL CAMERA          o BATTERY
- AFLA                    o LENS
- o FILM
- o AUTO FOCUS

SUBMIT

LEARNING ENGINE REFINED RECOMMENDATIONS

# FIG. 7

LEARNING ENGINE CORRELATION TABLE

| NAME | CORRELATION | ACTIVATION | TRAINING | RULE | DEPTH | DECAY |
|---|---|---|---|---|---|---|
| LE 1 | CORR. TABLE 1 | ACTSPRDTB 1 | CAPTURE DATA 1 | NAVIGATION | 2 | 1 |
| LE 2 | CORR. TABLE 2 | ACTSPRDTB 2 | CAPTURE DATA 2 | SEQUENCE | 4 | 4 |
| LE 3 | CORR. TABLE 3 | ACTSPRDTB 3 | CAPTURE DATA 3 | COOCCUR | 1 | 2 |
| LE 4 | CORR. TABLE 4 | ACTSPRDTB 4 | CAPTURE DATA 4 | SEQUENCE | 3 | 3 |

**FIG. 8**

EP 1 573 586 B1

**EP 1 573 586 B1**

REFERENCES CITED IN THE DESCRIPTION

**Patent documents cited in the description**

- US 6169986 B1

- US 6389405 B1

**Non-patent literature cited in the description**

- Searching the web by constrained spreading activation. **CRESTANI F et al.** INFORMATION PROCESSING & MANAGEMENT. ELSEVIER, 01 July 2000, vol. 36, 585-605